# EUROPÄISCHE PATENTSCHRIFT

(11) **EP 4 368 792 B1**
(45) Veröffentlichungstag und Bekanntmachung des Hinweises auf die Patenterteilung: **01.10.2025**
(21) Anmeldenummer: 23204772.0
(22) Anmeldetag: 20.10.2023
(51) Int. Cl.: E04F 13/08, B32B 21/04, E04B 1/80, E04C 2/24, E04F 13/16, E04F 13/00, E04C 2/284

(54) **VERFAHREN ZUR ENERGETISCHEN GEBÄUDESANIERUNG**
METHOD FOR ENERGY-BASED CONSTRUCTION RENOVATION
PROCÉDÉ DE RÉNOVATION ÉNERGÉTIQUE DE BÂTIMENTS

(30) Priorität: 21.10.2022 DE 102022127810
(43) Veröffentlichungstag der Anmeldung: 15.05.2024
(73) Patentinhaber: ecoworks GmbH, 10559 Berlin (DE)
(72) Erfinder: HEISENBERG, Emanuel, 10559 Berlin (DE); MORITZ, Karsten, 10559 Berlin (DE); GREBE, Janos, 10559 Berlin (DE)
(74) Vertreter: Frick, Robert

(56) Entgegenhaltungen:
- DE-A1- 102019 128 118
- DE-A1- 3 831 517
- DE-U1- 202008 006 889
- DE-U1- 202008 012 765
- DE-U1- 202023 000 351

## Beschreibung

Die Erfindung betrifft ein Verfahren zur energetischen Gebäudesanierung, wobei die Außenwand eines Bestandsgebäudes wenigstens abschnittsweise mit vorgefertigten Paneelen überdeckt wird.

Eine weitreichende Sanierung des Gebäudebestands kann helfen, Emissionen und Energieverbrauch möglichst umfassend zu reduzieren. Ein Verfahren zur seriellen energetischen Gebäudesanierung ist in der DE 10 2021 107 398 A1 offenbart. Gemäß diesem Verfahren wird die Wand eines Bestandsgebäudes mit flächigen Paneelen sowie Haustechnikelementen überdeckt. Die Paneele sind in Holzrahmenbauweise gefertigt und wärmeisoliert. Sie werden vom Dachbereich der Bestandsgebäude abgehängt und zwischen den Paneelen und der Außenwand verbleibt ein Freiraum.

Die in diesem Verfahren verwendeten Paneele in Holzrahmenbauweise sind in der Herstellung allerdings relativ teuer und eine Befestigung durch Abhängen ist in der Praxis nicht immer umsetzbar.

Ein weiteres gattungsähnliches Verfahren, das Paneele in Holzrahmenbauweise verwendet, ist in der DE 10 2019 128 118 A1 offenbart. Eine Möglichkeit zur Befestigung solcher und ähnlicher Paneele an der Gebäudefassade ist in der DE 38 31 517 A1 offenbart.

Ein Verfahren zur Isolierung von Gebäuden, welches dreischichtige Isolationspaneele verwendet, ist in der DE 20 2008 006 889 U1 offenbart. Ein Verfahren zur Isolierung von Gebäuden, welches eine Isolation zwischen die Fassade und ein vorgelagertes Paneel einbringt, ist in der DE 20 2008 012 765 U1 offenbart.

Aufgabe der Erfindung ist es, ein wie eingangs genanntes Verfahren mit Blick auf die verwendeten Paneele und deren Befestigung weiterzuentwickeln, um die genannten Nachteile zu überwinden.

Vor diesem Hintergrund betrifft die Erfindung ein Verfahren zur energetischen Gebäudesanierung, wobei die Außenwand eines Bestandsgebäudes wenigstens abschnittsweise mit vorgefertigten Paneelen überdeckt wird. Die Paneele werden fabrikseitig vorgefertigt und zum Bestandsgebäude transportiert, wo sie vor die Außenwand gesetzt und an Befestigungselementen montiert werden, die in der Außenwand verankert sind. Erfindungsgemäß ist vorgesehen, dass es sich bei den Paneelen um Sandwichpaneele handelt, die zwei Deckschichten aus nichtmetallischen Werkstoffen und einen Kern aus Dämmstoff aufweisen, wobei der Dämmstoff vollständig oder teilweise aus nachwachsenden Materialien besteht.

Weiterhin ist vorzugsweise vorgesehen, dass die Paneele so vor der Außenwand befestigt sind, insbesondere durch entsprechende Ausbildung der Befestigungselemente, dass zwischen den Paneelen und der Außenwand ein Zwischenraum bleibt, in den eine Dämmebene eingebracht wird. In einer Ausführungsform kann es sich bei der Dämmebene um eine Einblasdämmung handeln. Alternativ können andere Dämmungen, wie beispielsweise Dämmplatten oder flexible Dämmmatten, in den Zwischenraum eingebracht oder als zusätzliche Schicht an den vorgefertigten Sandwichpaneelen vorhanden sein. Derartige weitere Dämmschichten können zur Erhöhung der Tragfähigkeit des Fassadenelementes beitragen, wenn sie mit anderen tragenden Schichten verbunden sind.

In vertikaler Richtung sind die Paneele vorzugsweise so dimensioniert, dass genau ein Stockwerk des Gebäudes abgedeckt wird. Die Höhe der Paneele kann insofern etwa 2,5 bis 4 Meter betragen, wobei Werte um 3 Meter typisch sein werden. Die horizontale Erstreckung (Länge) der Paneele ist grundsätzlich frei wählbar, wobei Längen zwischen etwa 4 und 8 Metern, vorzugsweise zwischen 5 und 7 Metern einen guten Kompromiss zwischen wünschenswerter Verringerung der Zahl und noch guter Transportfähigkeit darstellen.

Die Paneele sind in ihrer Größe und in der Anordnung von Fenster- und Türöffnungen individuell an das Bestandsgebäude angepasst und werden bereits fabrikseitig als individuell angepasste Elemente gefertigt. Fenster- und Türöffnungen sind in den Paneelen als Durchbrüche bereits fabrikseitig vorhanden. Insbesondere kann auch vorgesehen sein, dass in den Öffnungen auch bereits fabrikseitig Fenster bzw. Türen verbaut sind. Nach dem Transport an die Baustelle werden sie an den Befestigungselementen befestigt, z.B. in vertikaler, schräger oder horizontaler Lage angehängt oder aufgestellt.

Im Gegensatz zu den gemäß der DE 10 2021 107 398 A1 verwendeten Holzrahmenpaneelen fehlt es den Sandwichpaneelen an einer tragenden Rahmenkonstruktion. Vielmehr sind die drei verbundenen, in der Regel verklebten Schichten selbsttragend. Der Dämmstoffkern verbindet die beiden Deckschichten. Durch das Fehlen der tragenden Rahmenkonstruktion ist die Fertigung einfacher und es kann Gewicht eingespart werden. Insbesondere wird eine fabrik- bzw. werkseitige Vorfertigung der Sandwichpaneele mit an ein Bestandsgebäude individuell angepassten Abmessungen und Fenster- oder Türdurchbrüchen in einfacher Weise durch Zuschnitt ausgehend von einem größeren Flächenelement erreicht werden, das durch die Deckschichten und den Kern aus Dämmstoff gebildet ist und standardisiert im industriellen Maßstab produziert wird.

Die Sandwichpaneele sind vollständig oder zumindest zum Großteil aus nachwachsenden Materialien gefertigt. Bei den Deckschichten handelt es sich vorzugsweise um Platten aus einem Holz- oder Holzverbundwerkstoff, insbesondere Hartspanplatten (OSB-Platten), Sperrholzplatten oder Hartfaserplatten. Bei dem Dämmstoff handelt es sich vorzugsweise um einen Holzfaserdämmstoff oder einen anderen ligninhaltigen Dämmstoff. Der Dämmstoff ist vorzugsweise zug-, druck und schubfest und auch zug-, druck und schubfest mit den Deckschichten verbunden, damit er sich an der Tragfähigkeit des Sandwichpaneels signifikant beteiligt. Diese Materialwahl steht im Gegensatz zu bisher in der Bauwirtschaft eingesetzten Sandwichelementen, die beispielsweise Elemente aus zwei Trapezblechen mit integrierter Polystyrol- oder Polyurethandämmung umfassen.

Der Verbund der Schichten der Sandwichpaneele wird punktuell oder linear mit Klammern oder Fäden und/oder punktuell, linear oder flächig mit Klebstoffen erzielt. In einer Ausführungsform sind die Schichten flächig verklebt. Der Klebstoff richtet sich hinsichtlich Art, Dicke, Auftrag, Konsistenz und ggf. Mischungsverhältnis nach den zu verbindenden Flächen und dem Einsatzgebiet. Wichtig ist, dass der Verbund eine ausreichende Zug-, Druck- und Schubfestigkeit aufweist, damit das Sandwichelement insgesamt eine ausreichende Tragfähigkeit hat, um Einwirkungen im Einsatz, wie beispielsweise Eigengewicht, Auflasten oder Wind- und Schneelasten, bei Einhaltung der zulässigen Spannungen und Verformung aufzunehmen und sicher in die Befestigungselemente weiterzuleiten. Beispielhaft können als geeignete Klebstoffe ein Polyurethanklebstoff oder ein Leim verwendet werden.

Das Verbinden der Schichten kombiniert in den Sandwichpaneelen die Eigenschaften der verwendeten Materialien. Ein Verbiegen oder Brechen der Oberfläche wird durch den Dämmstoffkern erschwert, die Stabilität der Oberfläche schützt aber den weichen Kern vor Einwirkungen von außen. Durch den festen Verbund der Schichten geht die Summe der Schichtdicken in ihrer dritten Zehnerpotenz in die Biegetragfähigkeit des Sandwichelementes ein, während ohne einen Verbund nur die Summe der Einzelschichten in ihrer jeweiligen dritten Zehnerpotenz eingehen würde. Dieser beträchtliche Unterschied ist in der Statik unter dem Stichwort "Steineranteile" bekannt.

Die äußere Deckschicht des Sandwichpaneels kann in einer Ausführungsform im Interesse einer erhöhten Witterungsbeständigkeit oder im Interesse einer guten Optik diffusionsoffen beschichtet, verputzt, kaschiert (z.B. mit Blech), bemalt oder dergleichen sein. Auch können auch Außenwandbekleidungen mit oder ohne Hinterlüftung sowie mit oder ohne Unterkonstruktion am Sandwichpaneel, beispielsweise an der äußeren Deckschicht angebracht sein.

Die Dicke der Sandwichpaneele, also aller drei Schichten der Paneele zusammengenommen, beträgt vorzugsweise weniger als 15 cm, sofern damit die gewünschte Wärmedämmwirkung und Energieeffizienzklasse erzielt wird. Im Gegensatz zu den Rahmenbaupaneelen der DE 10 2021 107 398 A1 wird also eine wesentlich dünnere Konstruktion gewählt, was eine weitere Gewichts- und Kostenersparnis mit sich bringt. Durch die fehlenden Wärmebrücken und den durchgehenden Dämmstoffkern ist die Isolationswirkung dennoch gut. Außerdem ist im Verfahren der vorliegenden Erfindung eine teilweise Verlagerung der Dämmfunktion von den Paneelen weg in den Zwischenraum zwischen den Paneelen und der Außenwand vorgesehen.

Sofern vorhanden, besteht die Dämmebene im Zwischenraum zwischen den Paneelen und der Außenwand, die beispielsweise als Einblasdämmung vorliegt, vorzugsweise ebenfalls ausschließlich oder zum Großteil aus nachwachsenden Materialien, um eine gute Ökobilanz zu erzielen. Beispiele umfassen eine Cellulose-Dämmung oder eine Holzfaserdämmung. Alternativen umfassen Mineralfaser-, Glasfaser-, Pilz-, Schaum- oder Aerogel-Werkstoffe oder -Verbundwerkstoffe.

Der Dämmstoffkern des Sandwichpaneels und/oder die Dämmebene im Zwischenraum zwischen den Paneelen und der Außenwand kann auch inhomogen sein und in einem Bereich, beispielsweise über die Höhe eines Stockwerks, aus einem ersten Material, beispielsweise Cellulose- oder Holzfaser bestehen, und in einem anderen Bereich, beispielsweise zwischen den Stockwerken, durch eine Zone aus einem anderen Material, beispielsweise einem mineralischen Dämmmaterial unterbrochen sein. Insbesondere kann hierdurch eine Brandsperre, also ein Bereich mit einer erhöhten Feuerwiderstandsdauer gebildet werden.

Um eine möglichst große Homogenität und Lückenlosigkeit der Dämmebene sicherzustellen, wird im Rahmen des Verfahrens vorzugsweise nicht die ganze Außenwand des Gebäudes mit Paneelen überdeckt und die Dämmung, beispielsweise Einblasdämmung erst nachträglich eingebracht. Vielmehr ist vorzugsweise vorgesehen, dass die Dämmung, beispielsweise Einblasdämmung immer nach der Montage einer oder einer kleinen Gruppe an Paneelen, beispielsweise nach jedem Stockwerk des Gebäudes, nachgezogen wird, bevor das nächste Paneel oder die nächste Gruppe an Paneelen (z.B. das nächste Stockwerk) montiert wird.

Falls vorhanden, wird die Einblasdämmung typischerweise von oben nach unten in den Zwischenraum eingebracht, beispielsweise nach der Montage der Paneele für ein betreffendes Stockwerk. Alternative oder zusätzlich kann die Einblasdämmung auch durch etwaige Tür- oder Fensteröffnungen der Paneele oder von der Seite oder von unten eingebracht werden.

Bevorzugt ist, dass die Hauptdämmebene hinter den Paneelen, also in der Zone des Zwischenraums liegt. Mit anderen Worten ist vorzugsweise vorgesehen, dass der Wärmedurchlasswiderstand (R-Wert) dieser Dämmebene größer ist als der Wärmedurchlasswiderstand der Paneele. In konkreten Werten ausgedrückt kann der Wärmedurchlasswiderstand der Paneele beispielsweise im Bereich von ca. 2-6 oder 3-5 (m²K)/W liegen, und der Wärmedurchlasswiderstand der Dämmebene darüber.

In einer Ausführungsform können der Dämmschichtkern der Paneele und/oder eine Dämmebene im Zwischenraum zwischen den Paneelen und der Außenwand einen Dichtegradienten aufweisen. Dies kann beispielsweise durch eine Schichtung von mehreren einzelnen Dämmschichten mit unterschiedlicher Dichte erreicht werden, wobei die einzelnen Dämmschichten untereinander vorzugsweise zug-, druck- und schubfest miteinander verbunden sind, damit sie signifikant zur Tragfähigkeit des Sandwichpaneels beitragen. Der Dichtegradient ist vorzugsweise derart, dass die Dichte der Dämmschicht von außen nach innen, also in Richtung der Außenwand des bestehenden Gebäudes zunimmt. Auf diese Weise können die hygrothermischen Eigenschaften der Dämmung verbessert und das Risiko eines Kondensatanfalls verringert werden.

In einer weiteren Ausführungsform können der Dämmschichtkern der Paneele und/oder eine Dämmebene im Zwischenraum zwischen den Paneelen und der Außenwand als Dämmelement ein oder mehrere Vakuum-Dämmelemente aufweisen. Die Vakuum-Dämmelemente liegen dabei vorzugsweise als plattenförmige Elemente mit einer Umhüllung und einem evakuierten Innenraum vor und können, vorzugsweise zug-, druck- und schubsteif, an weitere Schichten des Paneels angeschlossen sein. Die Umhüllung der Vakuum-Dämmelemente kann beispielsweise aus Edelstahl hergestellt sein, welches eine niedrige Gasdurchlässigkeit aufweist, oder bei gewünschter Lichtdurchlässigkeit gegebenenfalls auch aus Glas. Vakuum-Dämmelemente zeichnen sich durch einen besonders großen Wärmedurchlasswiderstand aus.

Im Bereich der Tür- oder Fensteröffnungen wird der Zwischenraum zwischen den Paneelen und der Außenwand vorzugsweise durch Laibungen abgedeckt, die von den Paneelen bis durch die Außenwand des Gebäudes reichen. Bestehende Fenster oder Türen werden im Rahmen des Verfahrens typischerweise durch besser isolierende und folglich energieeffizientere Modelle ersetzt, die in Fenster- bzw. Türöffnungen der Paneele, wie oben erwähnt, in einer Ausführungsform bereits fabrikseitig eingefasst sein können. Bei den Laibungen kann es sich zumindest teilweise um Heizlaibungen handeln. Insbesondere, sofern die Laibungen fabrikseitig in das Sandwichpaneel eingebracht werden, kann eine Befestigung mit Toleranzausgleich vorgesehen sein, sodass etwaige Toleranzen auf der Baustelle ausgeglichen werden können, ohne eine Demontage zu erfordern.

Ein Teil der Befestigungselemente ist vorzugsweise in der Außenwand verankert. Geeignete wandseitige Befestigungselemente umfassen Träger, Konsolen und Windanker. Sie übergeben die Kräfte des Sandwichpaneels an die Bestandswand. Dies kann beispielsweise durch ein Verdübeln erreicht werden, also mittels Injektionsankern, mechanischen Ankern oder Betonschrauben. Die Befestigungselemente können punktuelle oder lineare Lager sein. Sie können je nach Zweck und Ausführungsart Vertikalkräfte, beispielsweise aus Eigengewicht, Auflast oder Schneelast, und/oder Horizontalkräfte, beispielsweise aus Windsog- und Winddrucklasten, übertragen.

Zwischen einzelnen Befestigungselementen kann ein Abstand von mehr als einem Meter vorgesehen sein. Besonders bevorzugt ist, dass der Vertikalabstand zwischen den Befestigungselementen der Höhe der Paneele entspricht, dass also jedes Paneel nur an seinen oberen und unteren Enden mit einem Befestigungselement verbunden ist. Der Horizontalabstand der Befestigungselemente kann beispielsweise zwischen 2 und 4 Metern liegen, oder so gewählt sein, dass über die Länge des Paneels drei Befestigungselemente zur Verfügung stehen, an den linken und rechten Enden des Paneels und in der Mitte. Ausgedrückt in einem Dichtewert würde dies etwa 0,5-1,5 Befestigungselemente pro 10 qm Wandfläche entsprechen. Im einem konkreten und bevorzugten Beispiel sitzt allen vier Eckpunkten jedes Paneels jeweils ein Befestigungselement, und zusätzlich noch je ein Befestigungselement in der Mitte der Ober- und Unterkante der Paneele.

An bzw. nahe den Ecken des häufig in der Frontalansicht rechteckigen Paneels werden vorzugsweise punktuelle Befestigungselemente angeordnet, damit das Befestigungselement als geteiltes Befestigungselement die Lasten von bis zu vier Eckpunkten von vier Fassadenelementen aufnehmen und weiterleiten kann. Nahe den Kanten des Sandwichpaneels werden dagegen vorzugsweise lineare Lager angeordnet. Handelt es sich um horizontale Linienlager, werden diese vorzugsweise nahe der Unter- und der Oberkante des Paneels angeordnet, damit ein Linienlager möglichst die Lasten von zwei übereinander angeordneten Fassadenelementen aufnehmen und weiterleiten kann. Handelt es sich um vertikale Linienlager, werden diese vorzugsweise nahe der beiden seitlichen Kanten des Paneels angeordnet, damit ein Linienlager möglichst die Lasten von zwei nebeneinander angeordneten Paneelen aufnehmen und weiterleiten kann.

Bei zumindest einem Teil der Befestigungselemente kann es sich um geteilte Befestigungselemente handeln, also um Befestigungselemente, an denen zwei oder sogar vier an der jeweiligen Stelle aneinanderstoßende Paneele gemeinsam befestigt sind. Geht man von dem Beispiel aus, dass an allen vier Eckpunkten der Paneele jeweils ein Befestigungselement sitzt, und zusätzlich an der Ober- und Unterkante der Paneele noch jeweils ein Befestigungselement in der Mitte, dann würden die an den Eckpunkten sitzenden Befestigungselemente von vier stoßenden Paneelen geteilt, und die an der Ober- und Unterkante sitzenden Befestigungselement von zwei stoßenden Paneelen.

Eine Anordnung mit möglichst wenigen und geteilten Befestigungselementen spart Arbeit vor Ort an der Baustelle, da jedes Befestigungselement manuell in der Wand verankert werden muss, was zeitaufwändig ist. Gleichzeitig ist bei wenigen und an den Stößen der Paneele sitzenden Befestigungselementen eine große Genauigkeit erforderlich. Die Befestigungselemente sind deshalb vorzugsweise ausgebildet, um Toleranzen in der Position der Verankerung ausgleichen zu können, horizontal und vertikal, weiter vorzugsweise auch noch in Tiefenrichtung. Hierzu eignet sich beispielsweise eine Konstruktion der Befestigungselemente aus zwei oder mehreren Profilelementen, wobei die Montageposition eines Basisprofils an der Außenwand und die relative Position des oder der weiteren Profilelemente relativ zum Basisprofil durch die Verwendung von Langlöchern innerhalb eines gewissen Bereichs variabel ist.

In einer Ausführungsform weisen die Sandwichpaneele an zu den Befestigungselementen korrespondierenden Positionen an deren Rückseite Beschläge auf, die als Befestigungspartner der Befestigungselemente dienen. Die wandseitigen Befestigungselemente und paneelseitigen Beschläge sind vorzugsweise ausgebildet, um ein Einhängen der Paneele von oben zu ermöglichen. Beispiele umfassen einen nach oben gerichteten Haken am Befestigungselement und einen korrespondierenden horizontalen Henkel am Beschlag, oder einen nach unten gerichteten Haken am Beschlag und einen korrespondierenden horizontalen Henkel am Befestigungselement. In einen nach oben gerichteten Haken können in einer Ausführungsform auch zwei übereinanderliegende horizontale Henkel an den Beschlägen zweier übereinander angeordneter Paneele eingehängt werden. Um nebeneinander angeordnete Paneele an einem Befestigungselement montieren zu können, kann ein Befestigungselement beispielsweise zwei nebeneinander angeordnete identische Befestigungskonturen, beispielsweise nach oben gerichtete Haken aufweisen.

In einer Ausführungsform sind an der inneren Schicht der Sandwichpaneele im Bereich der Beschläge flächige Unterlageplatten befestigt, die beispielsweise Kantenlängen von zwischen 10 und 40 cm haben können. Diese dienen der Lastabtragung und Verteilung über eine größere Fläche der Paneele. Die innere Schicht des Sandwichpaneels kann in dieser Ausführungsform gegebenenfalls weniger robust ausgeführt werden, was zu einer Gewichts- und/oder Kostenersparnis führen kann.

In einer Ausführungsform weist das Sandwichpaneel insgesamt, oder zumindest außerhalb des eben beschriebenen Bereichs der Beschläge, keine Verstärkungen aus beispielsweise Metall, Kunststoff oder Holz auf, etwa in Form von Holzklötzen. Dies vereinfacht die Produktion. Die Sandwichpaneele an sich sind so ausgeführt, dass sie allen statischen Anforderungen genügen.

Unabhängig von der konkreten Art der Befestigung der Sandwichpaneele kann in einer Ausführungsform vorgesehen sein, dass die Sandwichelemente so angeordnet werden, dass diese oben und unten und/oder seitlich nicht direkt aneinanderstoßen, sondern dass ein horizontaler und/oder vertikaler Spalt von beispielsweise zwischen 1 und 10 cm, vorzugsweise von 2 bis 5 cm verbleibt. Dies kann als Toleranzausgleich dienen und zudem die Schallausbreitung, beispielsweise von Wohnung zu Wohnung oder von Treppenhaus zu Wohnung, unterbrechen. Die Spalte können mit Dichtungen geschlossen werden, um ein Eindringen von Feuchtigkeit in den Zwischenraum zwischen den Paneelen und der Außenwand zu verhindern. Die Dichtungen können fabrikseitig oder an der Baustelle angebracht werden.

In einer Ausführungsform kann das Sandwichpaneel, ebenfalls zur Reduzierung der Schallausbreitung, massereiche Barrieren umfassen, die beispielsweise in horizontale und/oder vertikale Richtung verlaufen können. Die Barrieren können insbesondere eine oder beide der Deckschichten unterbrechen. Bevorzugt ist eine fabrikseitige Einbringung der Barrieren.

In einer Ausführungsform werden eines oder mehrere der im folgenden genannten Bauelemente bereits fabrikseitig in die Sandwichpaneele integriert, um die Arbeit an der Baustelle möglichst zu minimieren.

Zu diesen potentiell werkseitig bereits integrierten Elementen zählen Fenster- und Türen, oder Bauteile für den Sonnenschutz, wie beispielsweise Rollos, Jalousien oder Raffstoren.

Weiterhin können die Paneele fabrikseitig mit Leitungen für beispielsweise Luft, Kalt- und Warmwasser, Heizungen, Sanitäranlagen, Elektroanlagen, Photovoltaikanlagen oder Wärmepumpentechnik versehen werden. Die Leitungen können in den Kern aus Dämmstoff ebenso integriert werden, wie vor der inneren Deckschicht, was in der Anwendung dem in bevorzugten Ausführungsformen gedämmten Zwischenraum zwischen den Paneelen und der Außenwand entspricht.

Der vorliegenden Erfindung liegt also der Gedanke zugrunde, dass Paneele aus Holzrahmenbau für den Einsatzzweck eines gattungsgemäßen Verfahrens eigentlich überdimensioniert sind und durch leichtere und billigere Sandwichelemente ersetzt werden können. Tragende Eigenschaften sind nicht erforderlich, da bereits die Außenwand des Gebäudes selbst tragend ist. Die auf die Paneele wirkende Hauptlast in der Anwendungspraxis ist der Windsog, und diesbezüglich bieten die beschriebene Konstruktion und gegebenenfalls auch Verankerung ausreichend Stabilität. Die optionale Verlagerung eines Teils der Dämmung in den Zwischenraum zwischen den Paneelen und der Außenwand erlaubt eine noch leichtere und günstigere Konstruktion der Paneele selbst.

Weitere Einzelheiten und Vorteile der Erfindung ergeben sich aus dem nachfolgend anhand der Figuren beschriebenen Ausführungsbeispiel. Die Figuren zeigen:
- Figur 1:: eine perspektivische Schnittansicht eines gemäß einem erfindungsgemäßen Verfahren mit Paneelen überdeckten Bereichs einer Gebäudewand von schräg vorne;
- Figur 2:: eine perspektivische Schnittansicht des entsprechenden Bereichs von schräg hinten;
- Figur 3:: eine isolierte Darstellung der den Bereich überdeckenden Anordnung von schräg vorne;
- Figur 4:: eine weitere isolierte Darstellung dieser Anordnung von schräg hinten; und
- Figur 5:: eine Darstellung eines Paneels vor der Gebäudewand von der Seite.

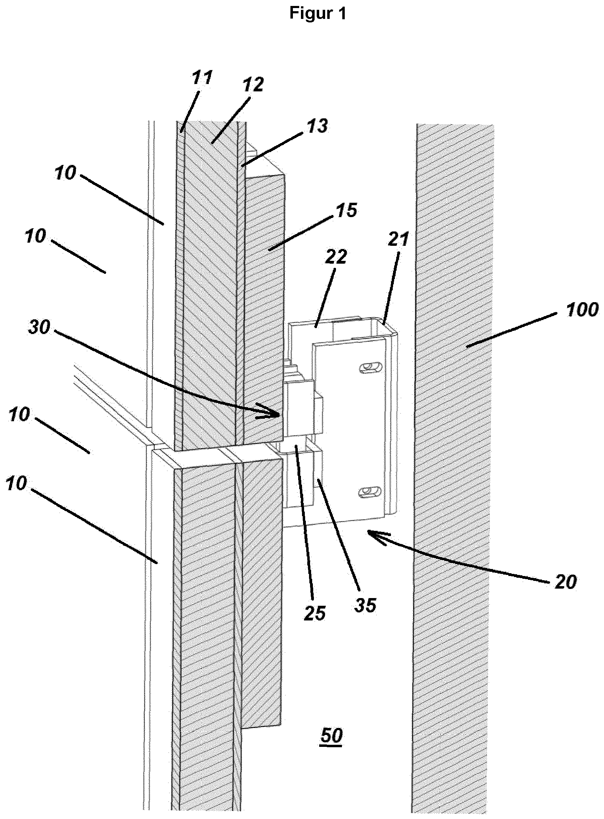

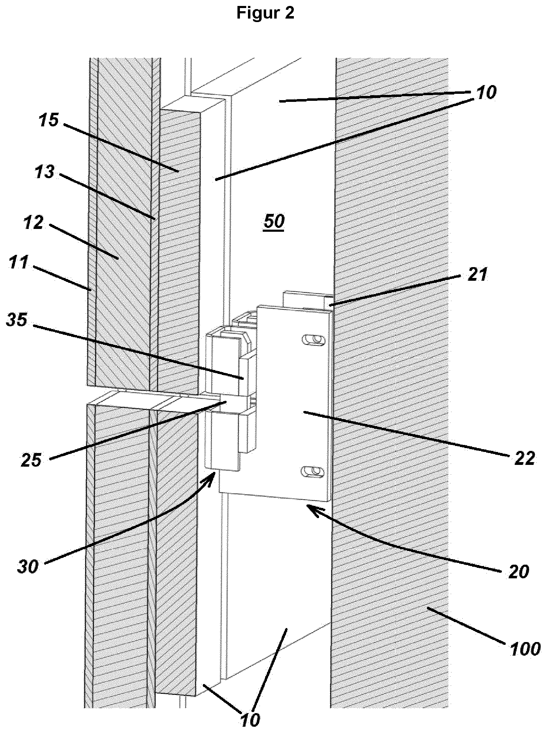

In Figuren 1 und 2 ist ein Bereich einer Außenwand 100 eines Bestandsgebäudes dargestellt, der im Rahmen eines erfindungsgemäßen Verfahrens zur energetischen Gebäudesanierung mit vorgefertigten Paneelen 10 überdeckt werden soll.

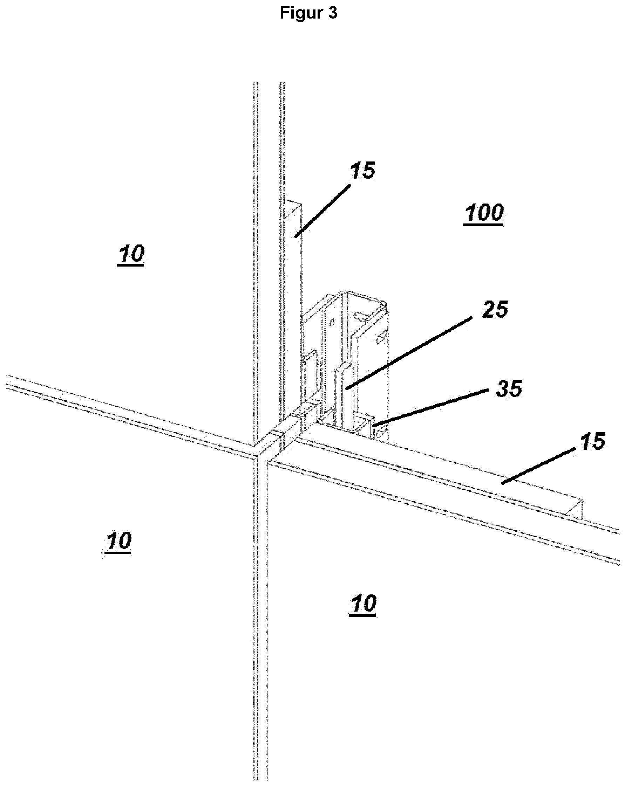

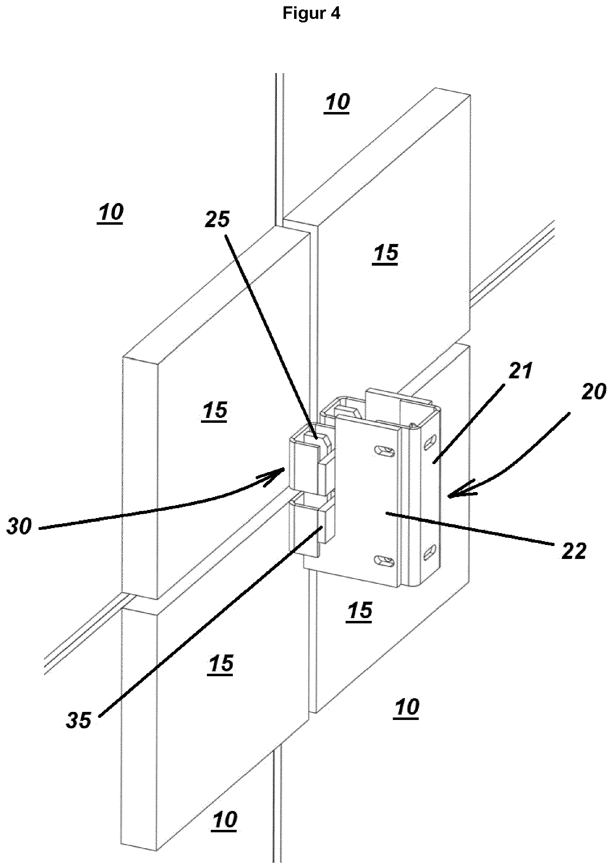

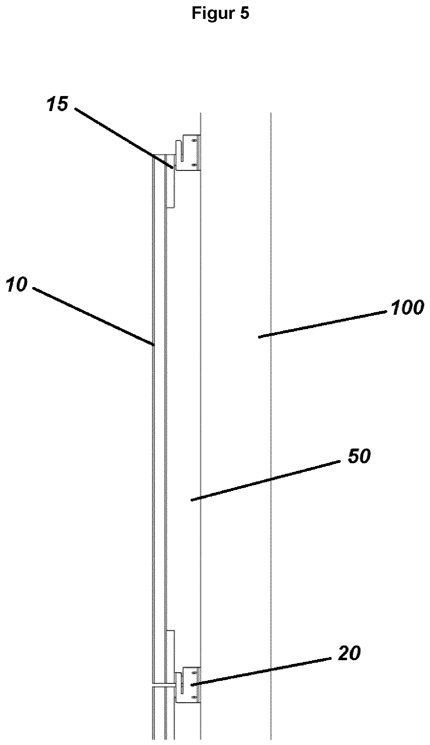

Figuren 3 und 4 zeigen die überdeckende Anordnung ohne die Außenwand, und Figur 5 zeigt ein einzelnes vor der Außenwand 100 montiertes Paneel 10 von der Seite.

Bei den Paneelen 10 handelt es sich um Sandwichpaneele, die vordere und hintere Deckschichten 11, 13 aufweisen, bei denen es sich beispielsweise um OSB-Platten handeln kann, zwischen denen eine Dämmschicht 12 aus z.B. einem druckbeständigen Holzfaserdämmstoff eingefasst ist. Die Schichten 11, 12, 13 können also komplett aus nachwachsenden Rohstoffen bestehen. Sie sind anhand z.B. eines PU-Klebstoffs flächig verklebt.

Die Paneele 10 werden fabrikseitig als individuell an das Bestandsgebäude angepasste Elemente gefertigt und als fertige Elemente zur Baustelle transportiert. Die Höhe der Paneele 10 ist so, dass sie der Höhe eines Stockwerks des Bestandsgebäudes entspricht. Werte um ca. drei Meter sind daher typisch. Die Länge der Paneele 10 beträgt typischerweise etwa das Doppelte der Höhe. Die Dicke der Paneele 10 beträgt beispielsweise da 10 cm, mit Wärmedurchlasswiderständen (R-Werten) von ca. 3-5 (m²K)/W. Etwaige Fenster- bzw. Türöffnungen, die zu entsprechenden Öffnungen in der Außenwand 100 des Bestandsgebäudes korrespondieren, sind in den Paneelen 10 als Durchbrüche (in der Figur nicht dargestellt) bereits fabrikseitig vorhanden.

Um die Paneele 10 vor der Außenwand 100 zu befestigen, sind speziell gestaltete Befestigungselemente 20 vorgesehen, die einerseits in der Außenwand 100 derart verdübelt sind, dass sie einer normalen Zugbelastung von mindestens 10 kN standhalte, und andererseits eine Befestigungskontur in Form zweier nebeneinander angeordneter und nach oben gerichteter Haken 25 aufweisen.

Die Befestigungselemente 20 umfassen ein U-Profil 21, dessen Basis Langlöcher aufweist, um eine seitlich in gewissem Umfang anpassungsfähige Befestigung an der Außenwand 100 zu ermöglichen. An den linken und rechten Schenkeln des U-Profils 21 sind jeweils Platten 22 befestigt, welche die Haken 25 tragen, wobei die Befestigung der Platten 22 am U-Profil 21 durch eine Kombination von Rund- und Langlöchern dergestalt ist, dass der Abstand der Haken 25 von der Außenwand 100 in einem gewissen Umfang angepasst werden kann.

An den zu den Befestigungselementen 20 korrespondierenden Positionen sind an der Rückseite der Paneele 10 bestimmte Beschläge 30 befestigt, die einen horizontal ausgerichteten Henkel 35 aufweisen, der an den Haken 25 von oben eingehängt werden kann. Die Beschläge 30 sind nicht direkt an der hinteren Deckschicht 13 des Sandwichpaneels 10 angebracht, sondern an einer Unterlageplatte 15 aus einem Holzwerkstoff, die im entsprechenden Bereich flächig an der hinteren Deckschicht 13 anliegt und mit dieser verklebt ist, um die hintere Deckschicht 13 zu verstärken und die am Beschlag 30 eingeleitete Last über eine größere Fläche abzutragen.

Die eben beschriebene Ausbildung der Befestigungselemente 20 und Beschläge 30 führt einerseits zu einer gewissen vertikalen Flexibilität der Befestigung, da anhand von beispielsweise Abstandsstücken die Einrasttiefe der Henkel 35 in die Haken 25 angepasst werden kann. Andererseits erlaubt es die Ausbildung, zwei übereinander angeordnete Paneele 10 am selben Befestigungselement 20 zu befestigen, indem die horizontalen Henkel 35 der Beschläge 30 zweier übereinander angeordneten Paneele 10 übereinander in den selben Haken 25 eingehängt werden. Weiterhin erlaubt es die beschriebene Ausbildung der Befestigungselemente 20 und Beschläge 30, zwei nebeneinander angeordnete Paneele 10 am selben Befestigungselement 20 zu befestigen, indem die horizontalen Henkel 35 der Beschläge 30 zweier nebeneinander angeordneten Paneele 10 übereinander in die zwei nebeneinander angeordneten Haken 25 desselben Befestigungselements 20 eingehängt werden. Voraussetzung ist in allen Fällen, dass die Beschläge 30 an den Ober- bzw. Unterkanten der Paneele 10 bzw. in den Ecken der Paneele 10 angeordnet sind. Im gezeigten Ausführungsbeispiel ist dies verwirklicht (obwohl nicht vollständig dargestellt), indem an allen vier Eckpunkten jedes Paneels 10 jeweils ein Beschlag 30 angebracht ist, und zusätzlich noch je ein Beschlag 30 in der Mitte der Ober- und Unterkante der Paneele 100. Die Befestigungselemente 20 befinden sich an entsprechenden Positionen der Außenwand 100.

Insofern handelt es sich bei den Befestigungselementen 20 um geteilte Befestigungselemente, an denen (in der Mitte der Ober- und Unterkante der Paneele 10) zwei bzw. (an den Eckpunkten der Paneele 10) sogar vier stoßende Paneele 10 gemeinsam befestigt sind. Da die Verankerung jedes Befestigungselements 20 in der Außenwand 100 einen nicht unerheblichen Aufwand vor Ort bedeutet, führt die Einsparung an Befestigungselementen 20 in Summe zu einer erheblichen Arbeits- und Kosteneinsparung. Durch die Anpassungsfähigkeit der genauen Montageposition in allen drei Richtungen (seitlich, vertikal, Tiefenrichtung) ist zudem die Fehleranfälligkeit einer solchen Befestigung reduziert, und durch die relativ leichte Ausgestaltung der Paneele 10 in dünner Sandwichbauweise ist eine Haltekraft von etwa 10 kN auch bei einem geteilten Befestigungselement 20 ausreichend.

In den Zwischenraum 50 zwischen den Paneelen 10 und der Außenwand 100 wird noch eine in den Figuren nicht dargestellte Einblasdämmung eingebracht. Die Einblasdämmung besteht vorzugsweise aus nachwachsenden Materialien. Beispiele umfassen eine Cellulose-Dämmung oder eine Holzfaserdämmung. Die Einblasdämmung wird typischerweise nach der Montage einer Gruppe an Paneelen vor einem Stockwerk des Gebäudes von oben in den Zwischenraum eingefüllt, bevor das nächste Stockwerk mit weiteren Paneelen kaschiert wird.

Die Einblasdämmung stellt vorzugsweise die Hauptdämmebene dar, was mit anderen Worten bedeutet, dass der R-Wert der Einblasdämmung größer ist als der R-Wert der Paneele 10. In jedem Fall ermöglicht es die Einblasdämmung, trotz einer relativ dünnen und leichten Ausbildung der Paneele 10 selbst eine erforderliche Dämmwirkung zu erreichen. Der Zwischenraum 50 kann, wie insbesondere in Figur 5 ersichtlich ist, dicker sein, als die Paneele 10 selbst.

## Patentansprüche

1. Verfahren zur energetischen Gebäudesanierung, wobei die Außenwand (100) eines Bestandsgebäudes wenigstens abschnittsweise mit vorgefertigten Paneelen (10) überdeckt wird, die fabrikseitig vorgefertigt und zum Bestandsgebäude transportiert werden, wo sie vor die Außenwand (100) gesetzt und an Befestigungselementen (20) montiert werden, die in der Außenwand (100) verankert sind, wobei es sich bei den Paneelen (10) um Sandwichpaneele handelt, die zwei Deckschichten (11, 13) aus nichtmetallischen Werkstoffen und einen Kern aus Dämmstoff (12) aufweisen, wobei der Dämmstoff vollständig oder teilweise aus nachwachsenden Materialien besteht, und wobei wenigstens ein Teil der Paneele (10) Fenster- und/oder Türöffnungen in Form von Durchbrüchen aufweist, an Stellen, die mit entsprechenden Fenster- und/oder Türöffnungen in der Außenwand (100) korrespondieren,
**dadurch gekennzeichnet,**
**dass** die Paneele (10) keine tragende Rahmenkonstruktion aufweisen und die Schichten der Paneele (10) punktuell oder linear mit Klammern oder Fäden und/oder punktuell, linear oder flächig mit Klebstoffen verbunden sind.

2. Verfahren nach Anspruch 1, **dadurch gekennzeichnet, dass** sich zwischen der inneren Deckschicht (13) des Paneels und der Außenwand (100) ein Zwischenraum (50) befindet, in dem sich eine weitere Dämmebene befindet, beispielsweise in Form einer Einblasdämmung oder einer weiteren am Paneel (10) angebrachten Dämmschicht, wobei vorzugsweise vorgesehen ist, dass die weitere Dämmebene ausschließlich oder zum Großteil aus nachwachsenden Materialien besteht, insbesondere eine Cellulose-Dämmung oder eine Holzfaserdämmung ist.

3. Verfahren nach einem der vorhergehenden Ansprüche, **dadurch gekennzeichnet, dass** es sich bei den Deckschichten (11, 13) der Paneele (10) um Platten aus einem Holzwerkstoff, insbesondere Hartspanplatten (OSB-Platten), Sperrholzplatten oder Hartfaserplatten handelt, und/oder dass es sich bei dem Dämmstoff (12) der Paneele (10) um einen Holzfaserdämmstoff handelt.

4. Verfahren nach einem der vorhergehenden Ansprüche, **dadurch gekennzeichnet, dass** der Dämmstoffkern (12) des Paneels (10) und/oder eine Dämmebene im Zwischenraum (50) zwischen den Paneelen (10) und der Außenwand (100) inhomogen ist und in einem Bereich aus einem ersten Dämmmaterial, beispielsweise aus Cellulose- oder Holzfaser besteht, und durch eine Zone aus einem anderen Dämmmaterial, beispielsweise einem mineralischen Dämmmaterial unterbrochen ist.

5. Verfahren nach einem der vorhergehenden Ansprüche, **dadurch gekennzeichnet, dass** der Dämmschichtkern (12) der Paneele (10) und/oder eine Dämmebene im Zwischenraum (50) zwischen den Paneelen (10) und der Außenwand (100) einen Dichtegradienten aufweisen, vorzugsweise derart, dass die Dichte der Dämmschicht oder der Dämmschichten von außen nach innen, also in Richtung der Außenwand (100) des bestehenden Gebäudes zunimmt.

6. Verfahren nach einem der vorhergehenden Ansprüche, **dadurch gekennzeichnet, dass** die Paneele (10) so angeordnet sind, dass diese oben und unten und/oder seitlich nicht direkt aneinanderstoßen, sondern ein horizontaler und/oder vertikaler Spalt verbleibt, der vorzugsweise anhand einer Dichtung geschlossen ist.

7. Verfahren nach einem der vorhergehenden Ansprüche, **dadurch gekennzeichnet, dass** an wenigstens einem Teil der Befestigungselemente (20) entweder zwei oder vier der Paneele (10) montiert sind.

8. Verfahren nach Anspruch 7, **dadurch gekennzeichnet, dass** an allen vier Eckpunkten wenigstens einiger Paneele (10) jeweils Befestigungselemente (20) sitzen, an denen vier stoßende Paneele (10) gemeinsam montiert sind, wobei es sich bei den betreffenden Befestigungselementen (20) vorzugsweise um Punktlager handelt.

9. Verfahren nach Anspruch 7 oder 8, **dadurch gekennzeichnet, dass** an den Ober- und Unterkanten wenigstens einiger Paneele (10) jeweils Befestigungselemente (20) sitzen, an denen zwei stoßende Paneele (10) montiert sind, wobei es sich bei den betreffenden Befestigungselementen (20) vorzugsweise um Linienlager handelt.

10. Verfahren nach einem der vorhergehenden Ansprüche, **dadurch gekennzeichnet, dass** die Paneele (10) an zu den Befestigungselementen (20) korrespondierenden Positionen korrespondierende Beschläge (30) aufweisen, wobei die wandseitigen Befestigungselemente (20) und paneelseitigen Beschläge (30) vorzugsweise ausgebildet sind, um ein Einhängen der Paneele (10) von oben zu ermöglichen.

11. Verfahren nach einem der vorhergehenden Ansprüche, **dadurch gekennzeichnet, dass** Fenster, Türen oder Bauteile für den Sonnenschutz fabrikseitig in die Paneele (10) integriert werden.

12. Verfahren nach einem der vorhergehenden Ansprüche, **dadurch gekennzeichnet, dass** die Paneele (10) fabrikseitig mit Leitungen für beispielsweise Luft, Kalt- und Warmwasser, Heizungen, Sanitäranlagen, Elektroanlagen, Photovoltaikanlagen oder Wärmepumpentechnik versehen werden, wobei die Leitungen vorzugsweise in den Kern aus Dämmstoff (12) integriert oder vor die innere Deckschicht (13) gesetzt werden.

13. Verfahren nach einem der vorhergehenden Ansprüche, **dadurch gekennzeichnet, dass** die fabrikseitige Vorfertigung der Paneele (10) den Zuschnitt der Paneele (10) aus einem größeren Flächenelement umfasst, das durch die Deckschichten (11, 13) und den Kern aus Dämmstoff (12) gebildet ist und standardisiert im industriellen Maßstab produziert wird.

## Claims

1. Method for energy-efficient building renovation, wherein the outer wall (100) of an existing building is covered with prefabricated panels (10) at least in portions, which are prefabricated at a factory and are transported to the existing building, where they are placed in front of the outer wall (100) and mounted on fastening elements (20), which are anchored in the outer wall (100), wherein the panels (10) are sandwich panels which comprise two cover layers (11, 13) made of non-metal materials and a core made of insulating material (12), wherein the insulating material completely or partially consists of sustainable materials, and wherein at least some of the panels (10) comprise window and/or door openings in the form of through-holes at points which correspond to corresponding window and/or door openings in the outer wall (100),
**characterised in that**
the panels (10) do not comprise a supporting frame construction and the layers of the panels (10) are connected at points or linearly by staples or threads and/or at points, linearly or over the surface by adhesives.

2. Method according to claim 1, **characterised in that** an intermediate space (50) is located between the inner cover layer (13) of the panel and the outer wall (100) and in which a further insulating plane is located, for example in the form of blown-in insulation or a further insulating layer attached to the panel (10), wherein it is preferably provided that the further insulating plane consists exclusively or mostly of sustainable materials, in particular cellulose insulation or wood-fibre insulation.

3. Method according to any of the preceding claims, **characterised in that** the cover layers (11, 13) of the panels (10) are boards made of a wood material, in particular hard chipboard (OSB board), plywood board or fibreboard, and/or **in that** the insulating material (12) of the panels (10) is wood-fibre insulating material.

4. Method according to any of the preceding claims, **characterised in that** the insulating material core (12) of the panel (10) and/or an insulating plane in the intermediate space (50) between the panels (10) and the outer wall (100) are inhomogeneous and, in one region, consist of a first insulating material, for example of cellulose fibre or wood fibre, and are interrupted by a zone made of another insulating material, for example a mineral insulating material.

5. Method according to any of the preceding claims, **characterised in that** the insulating material core (12) of the panels (10) and/or an insulating plane in the intermediate space (50) between the panels (10) and the outer wall (100) have a density gradient, preferably such that the density of the insulating layer or the insulating layers increases from the outside to the inside, i.e. in the direction of the outer wall (100) of the existing building.

6. Method according to any of the preceding claims, **characterised in that** the panels (10) are arranged such that they do not directly abut one another at the top and bottom and/or at the sides, but instead a horizontal and/or vertical gap remains, which is preferably closed by a seal.

7. Method according to any of the preceding claims, **characterised in that** either two or four of the panels (10) are mounted on at least some of the fastening elements (20).

8. Method according to claim 7, **characterised in that** fastening elements (20) are each positioned at all four corner points of at least some panels (10), on which fastening elements four abutting panels (10) are jointly mounted, wherein the fastening elements (20) in question are preferably point supports.

9. Method according to claim 7 or 8, **characterised in that** fastening elements (20) are each positioned on the upper and lower edges of at least some panels (10), on which fastening elements two abutting panels (10) are mounted, wherein the fastening elements (20) in question are preferably line supports.

10. Method according to any of the preceding claims, **characterised in that** the panels (10) comprise corresponding fittings (30) at positions corresponding to the fastening elements (20), wherein the wall-side fastening elements (20) and panel-side fittings (30) are preferably designed to make it possible to hang the panels (10) from above.

11. Method according to any of the preceding claims, **characterised in that** windows, doors or components for sun shading are integrated into the panels (10) at the factory.

12. Method according to any of the preceding claims, **characterised in that** the panels (10) are provided, for example, with pipes for air, hot and cold water, heating, sanitary installations, electrical installations, photovoltaic installations or heat-pump technology at the factory, wherein the pipes are preferably integrated in the core made of insulating material (12) or are positioned in front of the inner cover layer (13).

13. Method according to any of the preceding claims, **characterised in that** prefabricating the panels (10) at the factory includes cutting the panels (10) to size from a larger sheet element, which is formed by the cover layers (11, 13) and the core made of insulating material (12) and is produced on an industrial scale in a standardised manner.

## Revendications

1. Procédé de rénovation énergétique d'un bâtiment, dans lequel le mur extérieur (100) d'un bâtiment existant est recouvert au moins par sections de panneaux préfabriqués (10), qui sont préfabriqués en usine et transportés vers le bâtiment existant, où ils sont placés devant le mur extérieur (100) et montés sur des éléments de fixation (20) qui sont ancrés dans le mur extérieur (100), les panneaux (10) consistant en des panneaux sandwich, qui présentent deux couches de recouvrement (11, 13) en matériaux non métalliques et un noyau en matériau isolant (12), le matériau isolant étant constitué entièrement ou partiellement de matériaux renouvelables, et au moins une partie des panneaux (10) présentant des ouvertures de fenêtre et/ou de porte sous forme de percées, à des emplacements qui correspondent à des ouvertures de fenêtre et/ou de porte correspondantes dans le mur extérieur (100),
**caractérisé en ce que**
les panneaux (10) ne présentent pas de structure de cadre porteuse et les couches des panneaux (10) sont reliées ponctuellement ou linéairement par des agrafes ou des fils et/ou ponctuellement, linéairement ou en surface par des adhésifs.

2. Procédé selon la revendication 1, **caractérisé en ce qu'**entre la couche de recouvrement intérieure (13) du panneau et le mur extérieur (100) se trouve un espace intermédiaire (50) dans lequel se trouve un autre niveau d'isolation, par exemple sous la forme d'une isolation soufflée ou d'une autre couche d'isolation appliquée sur le panneau (10), il étant de préférence prévu que l'autre niveau d'isolation est constitué exclusivement ou en grande partie de matériaux renouvelables, notamment qu'il s'agit d'une isolation en cellulose ou d'une isolation en fibres de bois.

3. Procédé selon l'une quelconque des revendications précédentes, **caractérisé en ce que** les couches de recouvrement (11, 13) des panneaux (10) consistent en des plaques en un matériau à base de bois, notamment des plaques de particules dures (plaques OSB), des plaques de contreplaqué ou des plaques de fibres dures, et/ou **en ce que** le matériau isolant (12) des panneaux (10) consiste en un matériau isolant à base de fibres de bois.

4. Procédé selon l'une quelconque des revendications précédentes, **caractérisé en ce que** le noyau isolant (12) du panneau (10) et/ou un plan d'isolation dans l'espace intermédiaire (50) entre les panneaux (10) et le mur extérieur (100) est inhomogène et est constitué dans une région d'un premier matériau isolant, par exemple de fibre de cellulose ou de bois, et est interrompu par une zone en un autre matériau isolant, par exemple un matériau isolant minéral.

5. Procédé selon l'une quelconque des revendications précédentes, **caractérisé en ce que** le noyau de couche isolante (12) des panneaux (10) et/ou un plan d'isolation dans l'espace intermédiaire (50) entre les panneaux (10) et le mur extérieur (100) présentent un gradient de densité, de préférence tel que la densité de la couche isolante ou des couches isolantes augmente de l'extérieur vers l'intérieur, c'est-à-dire en direction du mur extérieur (100) du bâtiment existant.

6. Procédé selon l'une quelconque des revendications précédentes, **caractérisé en ce que** les panneaux (10) sont agencés de telle sorte que ceux-ci d'aboutent pas directement les uns avec les autres en haut et en bas et/ou latéralement, mais qu'il subsiste un espace horizontal et/ou vertical qui est de préférence fermé à l'aide d'un joint.

7. Procédé selon l'une quelconque des revendications précédentes, **caractérisé en ce que** deux ou quatre des panneaux (10) sont montés sur au moins une partie des éléments de fixation (20).

8. Procédé selon la revendication 7, **caractérisé en ce qu'**aux quatre coins d'au moins certains panneaux (10) se trouvent respectivement des éléments de fixation (20) sur lesquels quatre panneaux (10) aboutés sont montés ensemble, les éléments de fixation (20) concernés consistant de préférence en des paliers ponctuels.

9. Procédé selon la revendication 7 ou 8, **caractérisé en ce que** sur les bords supérieurs et inférieurs d'au moins certains panneaux (10) se trouvent respectivement des éléments de fixation (20) sur lesquels sont montés deux panneaux aboutés (10), les éléments de fixation (20) concernés consistant de préférence en des paliers linéaires.

10. Procédé selon l'une quelconque des revendications précédentes, **caractérisé en ce que** les panneaux (10) présentent des ferrures (30) correspondantes dans des positions correspondant aux éléments de fixation (20), les éléments de fixation (20) côté mur et les ferrures (30) côté panneau étant de préférence conçus pour permettre un accrochage des panneaux (10) par le haut.

11. Procédé selon l'une quelconque des revendications précédentes, **caractérisé en ce que** des fenêtres, des portes ou des composants pour la protection solaire sont intégrés dans les panneaux (10) en usine.

12. Procédé selon l'une quelconque des revendications précédentes, **caractérisé en ce que** les panneaux (10) sont pourvus en usine de conduites pour, par exemple, l'air, l'eau froide et l'eau chaude, le chauffage, les installations sanitaires, les installations électriques, les installations photovoltaïques ou la technologie de pompe à chaleur, les conduites étant de préférence intégrées dans le noyau en matériau isolant (12) ou placées devant la couche de recouvrement intérieure (13).

13. Procédé selon l'une quelconque des revendications précédentes, **caractérisé en ce que** la préfabrication des panneaux (10) en usine comprend la découpe des panneaux (10) à partir d'un élément plat plus grand, qui est formé par les couches de recouvrement (11, 13) et le noyau en matériau isolant (12) et qui est produit de manière standardisée à l'échelle industrielle.
